# EUROPÄISCHE PATENTSCHRIFT

(11) **EP 3 803 178 B1**
(45) Veröffentlichungstag und Bekanntmachung des Hinweises auf die Patenterteilung: **29.06.2022**
(21) Anmeldenummer: 19728027.4
(22) Anmeldetag: 29.05.2019
(51) Int. Cl.: F16L 21/06, F16L 37/138, F16L 37/14, F16L 25/01

(54) **FLUIDVERBINDUNGSADAPTER, FLUIDVERBINDUNGSANORDNUNG SOWIE VERFAHREN ZUM HERSTELLEN EINER FLUIDVERBINDUNGSANORDNUNG**
FLUID-CONNECTION ADAPTER, FLUID-CONNECTION ARRANGEMENT AND METHOD FOR PRODUCING A FLUID-CONNECTION ARRANGEMENT
ADAPTATEUR DE RACCORD DE FLUIDE, SYSTÈME DE RACCORD DE FLUIDE AINSI QUE PROCÉDÉ DE FABRICATION D'UN SYSTÈME DE RACCORD DE FLUIDE

(30) Priorität: 29.05.2018 DE 102018208508
(43) Veröffentlichungstag der Anmeldung: 14.04.2021
(73) Patentinhaber: aft automotive GmbH, 48268 Greven-Reckenfeld (DE)
(72) Erfinder: MAY, Thomas, 48565 Steinfurt (DE); KRAMER, Dirk, 48329 Havixbeck (DE)
(74) Vertreter: Dietz, Christopher Friedrich
(86) Internationale Anmeldenummer: PCT/EP2019/064044
(87) Internationale Veröffentlichungsnummer: WO 2019/229164

(56) Entgegenhaltungen:
- DE-A1-102008 033 590
- DE-U1-202011 051 197
- FR-A1- 2 784 166
- US-A- 5 129 685
- US-A1- 2009 230 675

## Beschreibung

Die Erfindung betrifft einen Fluidverbindungsadapter, der zur fluidtechnischen Verbindung einer Rohrleitung mit einer Schlauchtülle über einen auf die Schlauchtülle aufschiebbaren Elastomerkörper verfügt, der einen zum Aufschieben auf die Schlauchtülle ausgebildeten Innenring, einen bezüglich des Innenrings konzentrisch angeordneten Außenring sowie einen den Innenring und den Außenring miteinander verbindenden Verbindungssteg aufweist, wobei der Innenring, der Außenring und der Verbindungssteg gemeinsam eine Rohrleitungsaufnahme zur Aufnahme eines Rohrleitungsendes der Rohrleitung begrenzen. Die Erfindung betrifft weiterhin eine Fluidverbindungsanordnung sowie ein Verfahren zum Herstellen einer Fluidverbindungsanordnung.

Aus dem Stand der Technik ist beispielsweise die Druckschrift DE 40 39 054 C1 bekannt. Diese betrifft eine Schlauch-Rohr-Verbindung, bei der das Rohr nahe seinem Ende mit wenigstens einer Halterippe versehen und der Schlauch mit einem Endabschnitt über die Halterippe hinweg auf das Rohr aufgeschoben und mittels einer den Schlauch hinter der Halterippe umgebenden Schelle oder dergleichen festgeklemmt ist. Dabei ist vorgesehen, dass zwischen dem Schlauch und dem Rohr wenigstens in dem zwischen der Halterippe und der Schelle liegenden Bereich ein Dichtungsmaterial angeordnet ist, das seine Dichtfähigkeit in einem Temperaturbereich von wenigstens -40 °C bis +140 °C beibehält. Auf diese Weise ergibt sich auch bei sehr niedrigen, unter dem Gefrierpunkt liegenden Temperaturen von bis zu -40 °C eine hohe Dichtigkeit bei hohem Fluiddruck im Schlauch und Rohr.

Ein Verfahren zum Herstellen der Verbindung besteht darin, dass das Dichtungsmaterial in zähflüssigem Zustand in Form einer das Rohr zwischen Halterippe und Klemmbereich der Schelle umgebenden Materialanhäufung wenigstens bis zur radialen Höhe der Halterippe in der Nähe der Halterippe aufgetragen und der Schlauch vor dem Aushärten des Dichtungsmaterials über die Halterippe und das Dichtungsmaterial hinweg auf das Rohr geschoben wird. Dies erleichtert das Aufschieben des Schlauchs auf das Rohr und einen Ausgleich von Oberflächenrauigkeiten des Rohrs.

Weiterhin ist aus dem Stand der Technik die Druckschrift DE 43 08 367 A1 bekannt. Diese betrifft eine Verbindungsvorrichtung. Es wird beschrieben, dass eine Leitung an einen Stutzen mittels der Verbindungsvorrichtung anschließbar ist, wobei die Verbindungseinrichtung eine Dichtungseinrichtung enthält. Die Verbindungsvorrichtung umfasst ferner ein rohrartiges Verbindungsstück mit einem Einsteckabschnitt, auf den die Leitung dicht aufsteckbar ist, und einen die Dichtungseinrichtung aufnehmenden Anschlussabschnitt, der mit dem Stutzen in durch die Dichtungseinrichtung abgedichteten Eingriff bringbar ist.

Zudem ist aus der Druckschrift US 2009/0230675 A1 eine Manschettendichtung bekannt, die einen ringförmigen Körper mit einem äußeren radialen Abschnitt, einem inneren radialen Abschnitt und einem Endabschnitt umfasst, wobei eine ringförmige Nut zwischen dem äußeren radialen Abschnitt und dem inneren radialen Abschnitt und eine Klemme um den äußeren radialen Abschnitt herum angeordnet ist, wobei die Klemme dazu ausgestaltet ist, den ringförmigen Körper einzuschnüren. Der äußere radiale Abschnitt, der innere radiale Abschnitt und der Endabschnitt bilden einen U-förmigen Querschnitt, der die Ringnut definiert, und die Ringnut umfasst ein offenes Ende und ein geschlossenes Ende.

Es ist Aufgabe der Erfindung, einen Fluidverbindungsadapter vorzuschlagen, welcher gegenüber bekannten Fluidverbindungsadaptern Vorteile aufweist, insbesondere auf besonders flexible und einfache Art und Weise eine fluidtechnische Verbindung einer Rohrleitung mit einer Schlauchtülle ermöglicht.

Dies wird erfindungsgemäß mit einem Fluidverbindungsadapter mit den Merkmalen des Anspruchs 1 erreicht. Dabei ist vorgesehen, dass zum Druckausgleich bei einem Einbringen der Rohrleitung in die Rohrleitungsaufnahme eine randgeschlossene Luftdurchtrittsöffnung den Außenring und/oder den Verbindungssteg vollständig durchgreift und/oder in dem Außenring und/oder dem Innenring wenigstens ein in axialer Richtung verlaufender, eine Stirnseite des Außenrings beziehungsweise des Innenrings auf der dem Verbindungssteg abgewandten Seite durchgreifender Druckausgleichskanal ausgebildet ist.

Der Fluidverbindungsadapter ist zur fluidtechnischen Verbindung der Rohrleitung mit der Schlauchtülle vorgesehen und ausgebildet. Er verfügt zur fluidtechnischen Verbindung der Rohrleitung mit der Schlauchtülle über einen auf die Schlauchtülle aufschiebbaren Elastomerkörper, der einen zum Aufschieben auf die Schlauchtülle ausgebildeten Innenring, einen bezüglich des Innenrings konzentrisch angeordneten Außenring sowie einen den Innenring und den Außenring miteinander verbindenden Verbindungssteg aufweist, und wobei der Innenring, der Außenring und der Verbindungssteg gemeinsam eine Rohrleitungsaufnahme zur Aufnahme eines Rohrleitungsendes der Rohrleitung begrenzen.

Als Leitungen zur fluidtechnischen Anbindung einer fluidführenden Einrichtung kommen grundsätzlich Schlauchleitungen und Rohrleitungen infrage. Eine Schlauchleitung hat den Vorteil, dass sie flexibler ist als eine Rohrleitung und entsprechend Relativbewegungen besser ausgleichen kann. Aufgrund ihrer Elastizität lässt sie sich leicht verbauen. Außerdem ermöglicht sie einen gewissen Toleranzausgleich. Zudem ist eine akustische Entkopplung mittels der Schlauchleitung möglich. Insbesondere im Kraftfahrzeugbereich besteht die Schlauchleitung jedoch aus kostenintensiven Materialien beziehungsweise Werkstoffen, beispielsweise um eine bestimmte Beständigkeit gegenüber einem Medium sicherzustellen. Bevorzugt weist die Schlauchleitung einen mehrlagigen Aufbau auf, der beispielsweise in der DIN73411 beschrieben ist.

Zudem erfordert es die Bauraumsituation in dem Kraftfahrzeug häufig, dass die Schlauchleitung als Formschlauch vorliegt, welcher zur Herstellung aufwändiger Werkzeuge bedarf. Bereits bei kleinsten Änderungen an der Leitungsführung der Schlauchleitung sind neue Teile aus neuen Werkzeugen erforderlich. Ein Formschlauch lässt sich im Nachhinein nicht verformen und ist nur für die vorbestimmte Geometrie verwendbar. Der Formschlauch ist also formstabil. Ein Baukastensystem aus einer Vielzahl von Formschläuchen lässt sich nur unter Inkaufnahme zusätzlicher Verbindungsstellen in der Leitungsführung verwirklichen. Eine derartige Ausgestaltung mit zusätzlichen Verbindungsstellen ist jedoch teuer und beeinflusst neben der Zuverlässigkeit und den Toleranzen auch den Druckverlust in der Schlauchleitung beziehungsweise dem Formschlauch negativ.

Die Rohrleitung unterscheidet sich von der Schlauchleitung insbesondere hinsichtlich der Steifigkeit, welche wesentlich von den Eigenschaften des jeweiligen Werkstoffs abhängt. Beispielsweise besteht die Rohrleitung aus einem Werkstoff mit einem höheren Elastizitätsmodul und/oder Schubmodul als die Schlauchleitung. Zur ökonomischen Ausbildung eines Leitungssystems, insbesondere mit hoher Variantenvielfalt, ist es daher sinnvoll, bevorzugt eine Rohrleitung beziehungsweise mehrere Rohrleitungen anstelle einer Schlauchleitung beziehungsweise mehrerer Schlauchleitungen einzusetzen. Die Rohrleitung liegt beispielsweise als extrudierte Rohrleitung, vorzugsweise aus Kunststoff, vor. Diese lässt sich durch geeignete Verfahren in verschiedenen Längen und verschiedenen Leitungsverläufen sehr ökonomisch darstellen. Die Rohrleitung lässt sich zudem durch geeignete Schichtaufbauten an die jeweiligen Medien und Temperaturansatzbereiche anpassen. Wenigstens ein Bereich der Rohrleitung, in welchem eine höhere Biege- und/oder Längenelastizität erforderlich ist, kann zum Beispiel als Wellrohrbereich ausgestaltet werden.

Die vorstehend erwähnte Schlauchtülle ist zur fluidtechnischen Verbindung mit einer Schlauchleitung vorgesehen und ausgebildet. Die Schlauchtülle ist beispielsweise Bestandteil einer fluidführenden Einrichtung, insbesondere einer wasserführenden Einrichtung. Bevorzugt ist die fluidführende Einrichtung Bestandteil eines Kraftfahrzeugs, insbesondere eines Kühlmittelkreislaufs des Kraftfahrzeugs. Sie kann jedoch auch Teil einer Filterspüleinrichtung zur Spülung eines Filters, insbesondere eines Kohlenwasserstofffilters, einer Bremsanlage, insbesondere einer Unterdruckanlage der Bremsanlage, einer Kurbelgehäuseentlüftungseinrichtung, einer Kraftstoffanlage oder einer Reduktionsmitteleinrichtung zur Einbringung von Reduktionsmittel in Abgas sein. Sie kann jedoch auch im Rahmen eines Haushaltsgeräts, einer Wasserinstallation eines Gebäudes oder einer Industrieanlage Anwendung finden.

Die Verbindung der Schlauchleitung mit der Schlauchtülle kann beispielsweise unmittelbar durch Überschieben der Schlauchleitung mit leichter Aufweitung über die Schlauchtülle und nachfolgender Sicherung der Schlauchleitung an der Schlauchtülle mittels einer Schlauchschelle erfolgen. Die Schlauchtülle ist beispielsweise nach DIN 74304 ausgeführt oder alternativ gemäß einer Betriebsnorm eines Kraftfahrzeugherstellers. In diesen Normen sind Kontur, Haupt- und Vorzugsmaße und Oberflächenanordnungen für die Schlauchtülle geregelt. Weil die Schlauchleitung innen vorzugsweise eine dauerelastische glatte Innenumfangsfläche aufweist, ist die Dichtheit der fluidtechnischen Verbindung der Schlauchleitung mit der Schlauchtülle unmittelbar gewährleistet.

Die Verbindung zwischen der Schlauchleitung und der Schlauchtülle wird zur Sicherstellung einer ausreichenden Überdruckfestigkeit gegen Abrutschen mit der Schlauchschelle gesichert. Die Schlauchschelle kann beispielsweise ausgeführt sein als Schraubschelle nach DIN 3017 oder als Federbandschelle nach DIN 3021. Die Schlauchschelle kann auch nach einer Betriebsnorm des Kraftfahrzeugherstellers ausgeführt sein. Grundsätzlich ist die Ausgestaltung der Schlauchschelle jedoch beliebig. Zumeist kommt jedoch eine federnde Spannschelle zum Einsatz.

Für eine fluidtechnische Verbindung der Rohrleitung mit der fluidführenden Einrichtung muss eine geeignete einfache Lösung gefunden werden. Zu unterscheiden sind hier Verbindungen, die nicht lösbar ausgestaltet sind und im Anlieferungszustand des Leitungssystems bereits realisiert beziehungsweise hergestellt sind, und Verbindungen, die erst nach der Anlieferung des Leitungssystems montiert werden, insbesondere manuell montiert werden, und - vorzugsweise - auch manuell servicefähig sind. Die nichtlösbare Verbindung kann durch eine Montage der Rohrleitung auf einem Anschlussstutzen mit einer sogenannten Tannenbaumkontur realisiert werden. An der Tannenbaumkontur kann wenigstens ein elastisches Dichtelement vorliegen, beispielsweise ein O-Ring. Die Verbindungen werden üblicherweise durch ein sogenanntes Aufschlagen hergestellt, nämlich mittels spezifischer Einrichtungen.

Als manuell montierbare beziehungsweise servicefähige Leitungsverbindung bietet sich eine Schnellkupplung an. Eine derartige Schnellkupplung ist bewährter Stand der Technik. So gibt es sogenannte V-Kupplungen, Kupplungen gemäß SAE-Norm, insbesondere nach SAE J2044, und Kupplungen nach VDA, insbesondere für größere Durchmesser und/oder für Kühlkreislaufanwendungen. Die Rohrleitung kann nach wie vor mittels Aufschlagen auf einen entsprechend ausgestalteten Anschlussstutzen der Schnellkupplung mit dieser verbunden sein. Dabei muss die Rohrleitung jedoch bestimmte Eigenschaften aufweisen, insbesondere entsprechende Anforderungen an Dehnbarkeit, Kriechfestigkeit und dergleichen erfüllen. Auch stoffschlüssige Verbindungen wie Kunststoffschweißen, zum Beispiel Rotationsreibschweißen oder Laserschweißen, oder Kleben, wie zum Beispiel in der Druckschrift DE 103 36 494 A1 beschrieben, sind umsetzbar.

In jedem Fall ist zur fluidtechnischen Verbindung der fluidführenden Einrichtung mit der Schlauchleitung also eine Schlauchtülle und zur fluidtechnischen Verbindung mit der Rohrleitung ein Anschlussstutzen notwendig. Das bedeutet schlussendlich, dass die fluidführende Einrichtung auf die Verwendung der Schlauchleitung oder der Rohrleitung angepasst werden muss und das jeweilige Verbindungselement, also entweder die Schlauchtülle oder der Anschlussstutzen, an ihr ausgebildet sein muss, um die Schlauchleitung oder die Rohrleitung fluidtechnisch mit ihr verbinden zu können. Um anstelle der Schlauchleitung eine Rohrleitungen mit der fluidführenden Einrichtung verwenden zu können, könnte also die Schlauchtülle durch einen entsprechenden Anschlussstutzen ausgetauscht werden. Dies ist jedoch für langjährig bewährte Standardbauteile, beispielsweise Leitungsthermostate, elektrische Wasserpumpen oder dergleichen, nicht ohne weiteres möglich.

Auch eine Modifizierung der fluidführenden Einrichtung für den Einsatz einer Schnellkupplung ist nicht ohne weiteres möglich. Hinzu kommt, dass hierbei entstehende Werkzeugkosten enorm sein können, weil Toleranzanforderungen für eine solche Schnellkupplung hoch sind und gegebenenfalls zusätzliche Schieberebenen erforderlich sind. Zudem entsteht eine weitere Bauteilvariante. Des Weiteren verursachen Schnellkupplungen höhere Kosten als eine Schlauchschelle und es muss Bauraum für eine Betätigung und Montage der Schnellkupplung zur Verfügung stehen.

Ein direktes Aufschieben der Rohrleitung auf die Schlauchtülle und ihre Sicherung mit einer Schlauchschelle ist in der Regel ebenfalls nicht sinnvoll realisierbar. Die Schlauchtülle ist auf die Verwendung einer Schlauchleitung und mithin auf das Vorliegen von Elastomerwerkstoffen abgestimmt. Für das Aufbringen der Rohrleitung auf die Schlauchtülle müsste zum einen die Rohrleitung gedehnt werden. Hierbei sind selbst bei elastischen Rohrleitungen enorme Kräfte erforderlich, sodass eine Handmontage und/oder -demontage nahezu unmöglich ist. Außerdem müsste die Rohrleitung derart elastisch sein, dass sie sich an den Außenumfang der Schlauchtülle anschmiegt, also auch nach dem Überlaufen einer an der Schlauchtülle vorgesehenen Wulst, einer sogenannten Olive. Des Weiteren müsste die Rohrleitung an ihrer Innenumfangsfläche über eine große Dichtfläche mit endlicher Oberflächengüte bei geringen Flächenpressungen zuverlässig abdichten und dauerhaft dicht bleiben. Dies ist ohne eine Innenschicht aus Elastomer kaum möglich und im Falle einer Wiedermontage der Rohrleitung auf der Schlauchtülle, bei der in der Regel bleibende Verformungen der Rohrleitung in einer anderen Lage positioniert werden, nahezu ausgeschlossen. Schließlich muss die Rohrleitung dem dauerhaften lokal begrenzten Anpressdruck einer Rohrschelle gewachsen sein.

Es könnte nun beispielsweise vorgesehen sein, die Rohrleitung über einen Adapter mit einer Schlauchleitung zu verbinden und diesen wiederum an der Schlauchtülle zu befestigen, nämlich auf bekannte Art und Weise mittels einer Schlauchschelle. Eine solche Lösung ist jedoch sehr aufwendig, weist mehrere Schnittstellen mit Undichtigkeitsrisiko auf und benötigt zudem viel Bauraum. Aus diesem Grund ist der Fluidverbindungsadapter derart ausgestaltet, dass er einerseits unmittelbar mit der Rohrleitung und andererseits unmittelbar mit der Schlauchtülle verbunden oder zumindest verbindbar ist. Hierzu verfügt der Fluidverbindungsadapter über den Elastomerkörper, der auf die Schlauchtülle aufschiebbar ist, also zum Aufschieben auf die Schlauchtülle vorgesehen und ausgebildet ist. In dem Elastomerkörper ist die Rohrleitungsaufnahme ausgebildet, welche zur bereichsweisen Aufnahme der Rohrleitung, nämlich zur Aufnahme des Rohrleitungsendes der Rohrleitung, vorgesehen und ausgebildet ist.

Zur Herstellung der fluidtechnischen Verbindung mittels des Fluidverbindungsadapters ist es vorgesehen, zunächst die Rohrleitung beziehungsweise ihr Rohrleitungsende in die Rohrleitungsaufnahme einzubringen und in dieser anzuordnen. Nachfolgend wird das Rohrleitungsende mitsamt dem Elastomerkörper auf die Schlauchtülle aufgeschoben und nachfolgend an ihr befestigt, beispielsweise mittels der bereits beschriebenen Schlauchschelle. Alternativ kann zur Befestigung eine Schiebehülse oder eine Federschelle verwendet werden. Mithilfe des Elastomerkörpers wird die Rohrleitung bereichsweise an ihrem Rohrleitungsende mit verbindungsspezifischen Eigenschaften einer Schlauchleitung ausgestattet, sodass das fluidtechnische Verbinden der Rohrleitung mit der Schlauchtülle ähnlich der Verbindung der Schlauchleitung mit der Schlauchtülle möglich ist. Unter dem Rohrleitungsende der Rohrleitung ist vorzugsweise ein freies Ende der Rohrleitung zu verstehen, auf dessen Seite die Rohrleitung mit der Schlauchtülle fluidtechnisch verbunden werden soll.

Der Elastomerkörper weist als wesentliche Bestandteile den Innenring, den Außenring und den Verbindungssteg auf. Der Innenring und der Außenring sind konzentrisch zueinander angeordnet, beispielsweise bezüglich einer Längsmittelachse des Elastomerkörpers. Sowohl der Außenring als auch der Innenring umgreifen jeweils die Längsmittelachse in Umfangsrichtung, vorzugsweise durchgehend. Es kann jedoch auch vorgesehen sein, dass zumindest der Außenring die Längsmittelachse lediglich bereichsweise umgreift oder sich aus mehreren in Umfangsrichtung voneinander beabstandeten Außenringsegmenten zusammensetzt, welche jeweils - in axialer Richtung gesehen - einerseits an dem Verbindungssteg angreifen und andererseits ein freies Ende aufweisen oder alternativ wiederum miteinander verbunden sind.

Der Innenring weist vorzugsweise eine Materialstärke in radialer Richtung auf, welche ein einfaches gemeinsames Aufschieben der Rohrleitung und des Elastomerkörpers auf die Schlauchtülle ermöglicht. Hierzu weist beispielsweise der Innenring eine Materialstärke in radialer Richtung auf, die zumindest einer Höhe eines an der Schlauchtülle vorliegenden Wulsts entspricht. Der Wulst liegt beispielsweise in Form einer Olive vor oder bildet eine solche aus. Vorzugsweise ist die Materialstärke des Innenrings größer als die Höhe des Wulsts. Mit einer derartigen Ausgestaltung kann das gemeinsame Aufschieben der Rohrleitung und des Elastomerkörpers auf die Schlauchtülle unter elastischer Komprimierung des Innenrings in radialer Richtung besonders einfach erfolgen. Zugleich wird durch das während des Aufschiebens erfolgende Komprimieren des Innenrings eine besonders fluiddichte Verbindung zwischen dem Innenring und mithin dem Elastomerkörper und der Schlauchtülle ausgebildet.

Der Innenring begrenzt die Rohrleitungsaufnahme in radialer Richtung nach innen, wohingegen der Außenring die Rohrleitungsaufnahme in radialer Richtung nach außen begrenzt. In axialer Richtung ist die Rohrleitungsaufnahme einseitig mittels des Verbindungsstegs begrenzt, der den Innenring und den Außenring miteinander verbindet. Beispielsweise sind der Außenring, der Innenring und der Verbindungssteg C-förmig zueinander angeordnet. Das bedeutet, dass im Längsschnitt gesehen der Außenring einen ersten Schenkel des Elastomerkörpers, der Innenring einen zweiten Schenkel des Elastomerkörpers und der Verbindungssteg einen dritten Schenkel des Elastomerkörpers bildet, wobei der erste Schenkel und der zweite Schenkel in radialer Richtung voneinander beabstandet angeordnet und lediglich über den dritten Schenkel miteinander verbunden sind.

Vorzugsweise weisen der Innenring und der Außenring dieselbe Erstreckung in axialer Richtung auf, sodass ihre dem Verbindungssteg jeweils abgewandten freien Enden miteinander fluchten, also an derselben Axialposition enden. Es kann jedoch auch vorgesehen sein, dass einer der Ringe, also der Außenring oder der Innenring, in axialer Richtung ausgehend von dem Verbindungssteg eine größere Erstreckung in axialer Richtung aufweist als der jeweils andere Ring. Beispielsweise kann durch eine größere Erstreckung des Innenrings in axialer Richtung der Fluidverbindungsadapter beziehungsweise der Elastomerkörper auf besonders einfache Art und Weise an unterschiedliche Dichtheitsanforderungen der fluidtechnischen Verbindung zwischen der Rohrleitung und der Schlauchtülle angepasst werden.

Besonders bevorzugt ist es vorgesehen, dass der Verbindungssteg mit dem Innenring und dem Außenring materialeinheitlich und/oder einstückig ausgebildet ist. In anderen Worten bestehen der Verbindungssteg, der Innenring und der Außenring aus demselben Material, sind einstückig miteinander ausgebildet oder beides. Bestehen der Verbindungssteg, der Innenring und der Außenring zumindest teilweise aus unterschiedlichen Materialien, so kann die einstückige Ausbildung beispielsweise durch Mehrkomponentenspritzgießen oder dergleichen realisiert sein. Besonders bevorzugt bestehen der Verbindungssteg, der Innenring und der Außenring jedoch durchgehend aus demselben Material und sind einstückig miteinander ausgestaltet. Der Elastomerkörper besteht aus einem Elastomer, beispielsweise einem Ethylen-Propylen-Dien-Kautschuk (EPDM) oder einem hydrierten Acrylnitril-Butadien-Kautschuk (HNBR), wobei letzterer besonders bevorzug peroxidisch vernetzt ist, um eine hohe Medienbeständigkeit zu erzielen. Das Material des Elastomerkörpers kann hydrolysestabilisiert sein. Auch kann es haftungsoptimiert sein.

Die Rohrleitungsaufnahme ist bevorzugt derart bemessen, dass der Außenring einerseits und der Innenring andererseits jeweils fluiddicht an der Rohrleitung anliegen. Das bedeutet, dass der Außenring mit einer Innenumfangsfläche an einer Außenumfangsfläche der Rohrleitung anliegt, wohingegen der Innenring mit einer Außenumfangsfläche an einer Innenumfangsfläche der Rohrleitung anliegt. Anders ausgedrückt weist die Rohrleitungsaufnahme in radialer Richtung Abmessungen, auf, welche einer Materialstärke der Rohrleitung beziehungsweise einer Wand der Rohrleitung entsprechen. Vorzugsweise ist der Elastomerkörper derart ausgestaltet, dass die Rohrleitung nach ihrem Einbringen in die Rohrleitungsaufnahme elastisch klemmend in dieser gehalten ist.

Im Rahmen einer Weiterbildung der Erfindung ist zur Befestigung der Rohrleitung und des Elastomerkörpers an der Schlauchtülle eine Schlauchschelle, eine Schiebehülse oder eine Federschelle vorgesehen. Die Schlauchschelle, die Schiebehülse oder die Federschelle sind zusätzlich zu dem Elastomerkörper Bestandteil des Fluidverbindungsadapters. Sie dienen zur gleichzeitigen Befestigung der Rohrleitung und des Elastomerkörpers an der Schlauchtülle. Hierzu wird das jeweilige Befestigungselement, also die Schlauchschelle, die Schiebehülse oder die Federschelle, nach dem Aufschieben derart angeordnet, dass sie den Elastomerkörper und die Rohrleitung in radialer Richtung nach innen verformen, insbesondere elastisch verformen, und mithin in Richtung der Schlauchtülle.

Das bedeutet, dass mittels des Befestigungselements der Elastomerkörper und die Rohrleitung an oder zumindest in Richtung der Schlauchtülle gedrängt sind. Hierbei wirkt das Befestigungselement unmittelbar auf den Außenring des Elastomerkörpers ein, an welchem es vorzugsweise direkt anliegt. Über den Außenring wirkt das Befestigungselement auf die Rohrleitung und über diese schlussendlich auf den Innenring ein, um diesen in Richtung der Schlauchtülle zu drängen, nämlich bevorzugt derart, dass der Innenring fluiddicht an der Schlauchtülle anliegt und die Rohrleitung fluiddicht zwischen dem Außenring und dem Innenring gehalten ist.

Unter der Schlauchschelle ist ein Befestigungselement zu verstehen, dessen Durchmesser beispielsweise mittels einer Stellschraube verstellbar ist. Auch die Federschelle ist ein Befestigungselement, dessen Durchmesser veränderbar ist, nämlich aufgrund einer Federkraft. Beispielsweise wird die Federschelle elastisch aufgeweitet und anschließend über den Elastomerkörper geschoben. Aufgrund der Rückstellkraft der Federschelle wird nach einem Freigeben der Federschelle der Elastomerkörper in Richtung der Schlauchtülle gedrängt, sodass der Elastomerkörper und die Rohrleitung sicher an der Schlauchtülle gehalten sind.

Beispielsweise liegt die Federschelle vormontiert an dem Elastomerkörper vor, insbesondere in vorgespannter Stellung arretiert. Die Federschelle ist also derart vormontiert, dass sie nach dem Lösen ihrer Arretierung ihren Durchmesser elastisch verkleinert beziehungsweise eine auf das Verkleinern gerichtete Federkraft bereitstellt. Aufgrund dieser Verkleinerung beziehungsweise der Federkraft wird der Elastomerkörper in Richtung der Schlauchtülle gedrängt, sodass nachfolgend die Rohrleitung zuverlässig an der Schlauchtülle gehalten ist. Die in vorgespannter Stellung arretierte Federschelle kann auch als selbstspannende Federschelle bezeichnet werden. In anderen Worten ist es bevorzugt vorgesehen, dass die Federstelle selbstspannend ist und/oder vormontiert an dem Elastomerkörper vorliegt.

Die Schiebehülse bezeichnet ein Befestigungselement, welches bezüglich des Elastomerkörpers in axialer Richtung verlagerbar ist. Beispielsweise liegt die Schiebehülse in einer ersten Stellung abseits des Elastomerkörpers vor, insbesondere die Rohrleitung umgreifend. Nach dem Aufschieben der Rohrleitung und des Elastomerkörpers auf die Schlauchtülle wird die Schiebehülse aus der ersten Stellung in eine zweite Stellung verlagert, nämlich in axialer Richtung bezüglich einer Längsmittelachse des Elastomerkörpers und/der der Rohrleitung. In der zweiten Stellung ist die Schiebehülse derart angeordnet, dass sie den Elastomerkörper in Richtung der Schlauchtülle drängt. Hierzu liegt die Schiebehülse an dem Außenring an und verformt diesen in radialer Richtung nach innen in Richtung der Schlauchtülle, sodass die Rohrleitung und der Elastomerkörper sicher an dieser gehalten sind.

Es kann bevorzugt vorgesehen sein, dass die Schiebehülse eine, insbesondere profilierte, Pressfläche aufweist, die nach einer Montage des Fluidverbindungsadapters den Elastomerkörper kontrahierend an dem Außenring anliegt. Die Pressfläche ist an einer Innenumfangsfläche der Schiebehülse ausgebildet und dient dazu, den Elastomerkörper in radialer Richtung nach innen mit einer Haltekraft zu beaufschlagen. Nach dem Anordnen der Schiebehülse auf dem Elastomerkörper zum Halten der Rohrleitung an der Schlauchtülle liegt die Schiebehülse mit ihrer Pressfläche an dem Außenring an, sodass der Elastomerkörper kontrahiert wird, also in Richtung der Schlauchtülle verformt wird.

Besonders bevorzugt ist die Pressfläche profiliert, um einen besonders zuverlässigen Halt der Schiebehülse auf dem Elastomerkörper sicherzustellen. Das Profil der Pressfläche ist beispielsweise derart ausgestaltet, dass ein Aufschieben auf den Elastomerkörper mit einem geringeren Kraftaufwand möglich ist als ein Entfernen von dem Elastomerkörper in die umgekehrte Richtung. In anderen Worten ist die Pressfläche derart profiliert, dass das Verlagern der Schiebehülse aus der ersten Stellung in Richtung der zweiten Stellung beziehungsweise in die zweite Stellung, mit einem geringeren Kraftaufwand möglich ist als in umgekehrter Richtung, also ein Verlagern aus der zweiten Stellung heraus in Richtung der ersten Stellung. Beispielsweise ist die Pressfläche hierzu im Längsschnitt gesehen mit einem Sägezahnprofil oder dergleichen ausgestaltet.

Eine besonders bevorzugte Ausgestaltung der Erfindung sieht vor, dass der Außenring auf seiner der Rohrleitungsaufnahme abgewandten Seite eine Befestigungsschellenaufnahme zur Aufnahme der Schlauchschelle oder der Federschelle aufweist. Das bedeutet, dass der Elastomerkörper zur Befestigung an der Schlauchtülle mittels der Schlauchschelle oder der Federschelle vorgesehen und ausgebildet ist. Zur abrutschsicheren Befestigung der Schlauchschelle oder der Federschelle ist die Befestigungsschellenaufnahme an dem Elastomerkörper ausgebildet, nämlich auf seiner der Rohrleitungsaufnahme abgewandten Außenseite und mithin an dem Außenring. Die Befestigungsschellenaufnahme ist in axialer Richtung wenigstens einseitig, vorzugsweise jedoch beidseitig, (jeweils) mittels eines Ringstegs begrenzt.

Im Falle der beidseitigen Begrenzung der Befestigungsschellenaufnahme mittels der mehreren Ringstege sind die Ringstege vorzugsweise in axialer Richtung derart voneinander beabstandet, dass die Schlauchschelle beziehungsweise Federschelle nach Anordnung an dem Elastomerkörper und insbesondere nach Befestigung des Fluidverbindungsadapters beziehungsweise des Elastomerkörpers an der Schlauchtülle mittels der Schlauchschelle beziehungsweise der Federschelle einerseits an einem ersten der Ringstege und andererseits an einem zweiten der Ringstege anliegt. Eine solche Ausgestaltung des Elastomerkörpers verhindert ein ungewolltes Abrutschen der Schlauchschelle beziehungsweise der Federschelle von dem Elastomerkörper und stellt insoweit eine zuverlässige und dauerhafte dichte Verbindung zwischen dem Fluidverbindungsadapter und der Schlauchtülle und entsprechend zwischen der Rohrleitung und der Schlauchtülle sicher.

Eine weitere besonders bevorzugte Ausführungsform der Erfindung sieht vor, dass der Außenring und/oder der Innenring jeweils auf seiner der Rohrleitungsaufnahme zugewandten Seite profiliert ist, und/oder dass der Innenring auf seiner der Rohrleitungsaufnahme abgewandten Seite im Längsschnitt gesehen profiliert ist. Unter der profilierten Ausgestaltung des jeweiligen Rings ist zu verstehen, dass dieser im Längsschnitt gesehen eine Oberfläche aufweist, welche von einer geraden Linie, insbesondere einer zu der Längsmittelachse parallel verlaufenden geraden Linie, abweicht. Beispielsweise ist durch die Profilierung ein sägezahnartiger oder ein faltenbalgartiger Verlauf hergestellt. Die Profilierung kann für den Außenring und den Innenring jeweils auf der der Rohrleitungsaufnahme zugewandten Seite vorliegen. Hierbei kann entweder der Außenring oder der Innenring profiliert sein. Besonders bevorzugt ist eine Profilierung sowohl des Innenrings als auch des Außenrings.

Die Profilierung auf der der Rohrleitungsaufnahme zugewandten Seite ist jeweils vorzugsweise derart ausgestaltet, dass die Rohrleitung zuverlässig in der Rohrleitungsaufnahme gehalten ist. Beispielsweise ist die Profilierung derart ausgestaltet, dass das Einbringen der Rohrleitung in die Rohrleitungsaufnahme mit einer geringeren Kraft möglich ist als das Entnehmen der Rohrleitung aus der Rohrleitungsaufnahme. Hierzu ist beispielsweise ein sägezahnartiges Profil realisiert. Zusätzlich oder alternativ kann der Innenring auf der der Rohrleitungsaufnahme abgewandten Seite profiliert sein, also auf sein der Schlauchtülle zugewandten Seite. Hierbei ist das Profil beispielsweise derart ausgestaltet, dass eine Innenkontur des Innenrings einer Außenkontur der Schlauchtülle entspricht oder zumindest im Wesentlichen entspricht.

Weist die Schlauchtülle also den wenigstens einen Wulst oder mehrere Wulste auf, so ist der Innenring bevorzugt derart profiliert, dass er auf seiner der Rohrleitungsaufnahme abgewandten Seite beziehungsweise seiner der Schlauchtülle zugewandten Seite für den Wulst oder mehrere der Wulste, vorzugsweise jeden der Wulste, jeweils eine an den entsprechenden Wulst form- und/oder abmessungsangepasste Aufnahme aufweist, in welcher der jeweilige Wulst nach der Montage des Elastomerkörpers an der Schlauchtülle eingreift, insbesondere formschlüssig eingreift. Dies ermöglicht einen besonders festen Sitz des Elastomerkörpers auf der Schlauchtülle.

Eine Weiterbildung der Erfindung sieht vor, dass der Elastomerkörper aus einem elektrisch leitfähigen Elastomer besteht. Eine solche Ausgestaltung ist insbesondere vorteilhaft, falls die Rohrleitung und die Schlauchtülle jeweils elektrisch leitfähig sind oder zumindest eine elektrisch leitfähige Schicht aufweisen. Beispielsweise ist eine Schicht der Rohrleitung, an welcher der Elastomerkörper nach seinem Aufschieben auf die Rohrleitung anliegt, elektrisch leitfähig, sodass der Elastomerkörper nach dem Aufschieben elektrisch mit der Rohrleitung verbunden ist. Bevorzugt besteht auch die Schlauchtülle in einem mit dem Elastomerkörper in Berührkontakt stehenden Bereich aus einem leitfähigen Material, sodass nach dem Herstellen der fluidtechnischen Verbindung zwischen der Rohrleitung und der Schlauchtülle mittels des fluidführenden Adapters die Rohrleitung über den Elastomerkörper elektrisch mit der Schlauchtülle verbunden ist, sodass beispielsweise ein Potentialausgleich erfolgen kann.

Schließlich ist nach der Erfindung vorgesehen sein, dass in dem Außenring und/oder dem Verbindungssteg wenigstens eine Luftdurchtrittsöffnung ausgebildet ist, und/oder dass in dem Außenring und/oder dem Innenring wenigstens ein Druckausgleichskanal ausgebildet ist. Unter der Luftdurchtrittsöffnung ist eine Öffnung zu verstehen, welche den Außenring beziehungsweise den Verbindungssteg vollständig durchgreift. Nach der Erfindung ist die Luftdurchtrittsöffnung randgeschlossen in dem Außenring beziehungsweise dem Verbindungssteg ausgebildet, sie weist also in wenigstens einer Richtung einen durchgehenden Rand auf. Beispielsweise ist die Luftdurchtrittsöffnung als Bohrung ausgestaltet.

Die Luftdurchtrittsöffnung dient beispielsweise einem Druckausgleich bei einem Einbringen der Rohrleitung in die Rohrleitungsaufnahme, in dessen Rahmen Luft aus der Rohrleitungsaufnahme bei dem Einbringen der Rohrleitung entweichen kann. Umgekehrt kann es selbstverständlich vorgesehen sein, durch die Luftaustrittsöffnung bei dem Einbringen der Rohrleitung in die Rohrleitungsaufnahme Luft in die Rohrleitungsaufnahme einzubringen, sodass sich die Rohrleitungsaufnahme aufweitet und entsprechend das Einbringen der Rohrleitung vereinfacht wird. Vorzugsweise sind in dem Außenring oder dem Verbindungssteg jeweils mehrere Luftdurchtrittsöffnungen realisiert. Besonders bevorzugt liegen mehrere Luftdurchtrittsöffnungen vor, von welchen wenigstens eine, vorzugsweise mehrere, in dem Außenring sowie wenigstens eine, vorzugsweise mehrere, in dem Verbindungssteg ausgebildet sind. Die Luftdurchtrittsöffnungen in dem Außenring verlaufen vorzugsweise in radialer Richtung, liegen also beispielsweise als Radialbohrungen vor. Die Luftdurchtrittsöffnungen in dem Verbindungssteg hingegen verlaufen vorzugsweise in axialer Richtung und liegen insoweit vorzugsweise als Axialbohrungen vor. Die in dem Außenring vorliegende Luftdurchtrittsöffnung ist vorzugsweise näher an dem Verbindungssteg als an einer dem Verbindungssteg abgewandten Seite des Außenrings angeordnet.

Zusätzlich oder alternativ zu der Luftdurchtrittsöffnung liegt der wenigstens eine Druckausgleichskanal vor, nämlich in dem Außenring beziehungsweise dem Innenring. Besonders bevorzugt liegen mehrere Druckausgleichskanäle vor, von welchen wenigstens einer, bevorzugt mehrere, in dem Außenring und wenigstens einer, vorzugsweise mehrere, in dem Innenring ausgebildet sind. Der wenigstens eine Druckausgleichskanal liegt in Form einer Vertiefung in dem Außen- beziehungsweise dem Innenring vor und erstreckt sich in axialer Richtung.

Beispielsweise durchgreift der Druckausgleichskanal den Außenring beziehungsweise den Innenring in axialer Richtung über wenigstens 50 %, wenigstens 60 %, wenigstens 70 %, wenigstens 75 %, wenigstens 80 % oder wenigstens 90 %. Nach der Erfindung durchgreift der Druckausgleichskanal eine Stirnseite des Außenrings beziehungsweise des Innenrings auf der dem Verbindungssteg abgewandten Seite. Der Druckausgleichskanal mündet vorzugsweise in die Rohrleitungsaufnahme ein beziehungsweise geht von dieser aus. Der Druckausgleichskanal ermöglicht einen Druckausgleich in axialer Richtung bei dem Einbringen der Rohrleitung in die Rohrleitungsaufnahme, welche hierdurch vereinfacht ist.

Weiterhin kann es vorgesehen sein, dass in der Rohrleitungsaufnahme ein Gleitmittel und/oder ein Klebstoff vorliegen, insbesondere verkapselt. Das Gleitmittel dient dem vereinfachten Einbringen der Rohrleitung in die Rohrleitungsaufnahme, der Klebstoff der stoffschlüssigen Befestigung des Elastomerkörpers an der Rohrleitung. Beispielsweise werden das Gleitmittel beziehungsweise der Klebstoff unmittelbar vor dem Einbringen der Rohrleitung in die Rohrleitungsaufnahme in letztere eingebracht. Es kann jedoch auch vorgesehen sein, dass das Gleitmittel beziehungsweise der Klebstoff bereits bei der Herstellung des Fluidverbindungsadapters in der Rohrleitungsaufnahme angeordnet werden, nämlich bevorzugt in verkapselter Form. Hierunter ist zu verstehen, dass das Gleitmittel beziehungsweise der Klebstoff durch mechanische Einwirkung während des Einbringens der Rohrleitung in die Rohrleitungsaufnahme freigesetzt wird, sodass die jeweilige Wirkung entfaltet werden kann.

Die Erfindung betrifft weiterhin eine Fluidverbindungsanordnung mit einer Rohrleitung, einer Schlauchtülle und einem Fluidverbindungsadapter gemäß den Ausführungen im Rahmen dieser Beschreibung, wobei der Fluidverbindungsadapter zur fluidtechnischen Verbindung der Rohrleitung mit der Schlauchtülle über einen auf die Schlauchtülle aufschiebbaren Elastomerkörper verfügt, der einen zum Aufschieben auf die Schlauchtülle ausgebildeten Innenring, einen bezüglich des Innenrings konzentrisch angeordneten Außenring sowie einen den Innenring und den Außenring miteinander verbindenden Verbindungssteg aufweist, wobei der Innenring, der Außenring und der Verbindungssteg gemeinsam eine Rohrleitungsaufnahme zur Aufnahme eines Rohrleitungsendes der Rohrleitung begrenzen. Dabei ist vorgesehen, dass zum Druckausgleich bei einem Einbringen der Rohrleitung in die Rohrleitungsaufnahme eine randgeschlossene Luftdurchtrittsöffnung den Außenring und/oder den Verbindungssteg vollständig durchgreift und/oder in dem Außenring und/oder dem Innenring wenigstens ein in axialer Richtung verlaufender, eine Stirnseite des Außenrings beziehungsweise des Innenrings auf der dem Verbindungssteg abgewandten Seite durchgreifender Druckausgleichskanal ausgebildet ist.

Auf die Vorteile einer derartigen Ausgestaltung der Fluidverbindungsanordnung beziehungsweise des Fluidverbindungsadapters wurde bereits hingewiesen. Sowohl die Fluidverbindungsanordnung als auch der Fluidverbindungsadapter können gemäß den Ausführungen im Rahmen dieser Beschreibung weitergebildet sein, sodass insoweit auf diese verwiesen wird. Die Fluidverbindungsanordnung weist als wesentliche Bestandteile die Rohrleitung, die Schlauchtülle und den Fluidverbindungsadapter auf.

Die Erfindung betrifft zudem ein Verfahren zum Herstellen einer Fluidverbindungsanordnung gemäß den Ausführungen im Rahmen dieser Beschreibung, wobei die Fluidverbindungsanordnung eine Rohrleitung, eine Schlauchtülle und einen Fluidverbindungsadapter aufweist, wobei der Fluidverbindungsadapter zur fluidtechnischen Verbindung der Rohrleitung mit der Schlauchtülle über einen Elastomerkörper verfügt, der auf die Schlauchtülle aufgeschoben wird und einen zum Aufschieben auf die Schlauchtülle ausgebildeten Innenring, einen bezüglich des Innenrings konzentrisch angeordneten Außenring sowie einen den Innenring und den Außenring miteinander verbindenden Verbindungssteg aufweist, wobei der Innenring, der Außenring und der Verbindungssteg gemeinsam eine Rohrleitungsaufnahme begrenzen, in der ein Rohrleitungsende der Rohrleitung angeordnet wird.

Dabei ist vorgesehen, dass zum Druckausgleich bei einem Einbringen der Rohrleitung in die Rohrleitungsaufnahme eine randgeschlossene Luftdurchtrittsöffnung den Außenring und/oder den Verbindungssteg vollständig durchgreift und/oder in dem Außenring und/oder dem Innenring wenigstens ein in axialer Richtung verlaufender, eine Stirnseite des Außenrings beziehungsweise des Innenrings auf der dem Verbindungssteg abgewandten Seite durchgreifender Druckausgleichskanal ausgebildet ist, und dass bei dem Aufschieben des Elastomerkörpers die Rohrleitungsaufnahme durch Einbringen eines unter Druck stehenden Mediums aufgeweitet wird.

Erneut wird zu möglichen vorteilhaften Weiterbildungen auf die Ausführungen im Rahmen dieser Beschreibung verwiesen. Insbesondere kann der Fluidverbindungsadapter gemäß den entsprechenden Ausführungen vorteilhaft weitergebildet sein.

Beispielsweise ist es vorgesehen, dass der Elastomerkörper mit der Rohrleitung stoffschlüssig verbunden wird. Hierzu wird bevorzugt in die Rohrleitungsaufnahme ein Klebstoff eingebracht und nachfolgend die Rohrleitung in die Rohrleitungsaufnahme eingeschoben, nämlich derart, dass die Rohrleitung in Kontakt mit dem Klebstoff gerät. Nach Aushärten des Klebstoffs sind die Rohrleitung und der Elastomerkörper stoffschlüssig verbunden. Auf diese Art und Weise wird eine besonders dauerhafte und fluiddichte Verbindung erzielt.

Eine weitere Ausführungsform der Erfindung sieht vor, dass der Elastomerkörper auf die Rohrleitung aufgeschoben wird, wobei das Aufschieben mittels eines an einem Innenumfang des Innenrings und an einem Außenumfang des Außenrings anliegenden Montageadapters erfolgt und/oder bei dem Aufschieben des Elastomerkörpers die Rohrleitungsaufnahme durch Einbringen eines unter Druck stehenden Mediums aufgeweitet wird. Grundsätzlich wird der Elastomerkörper zur Herstellung der Fluidverbindungsanordnung auf die Rohrleitung aufgeschoben, nämlich auf das Rohrleitungsende der Rohrleitung. Dies kann auf unterschiedliche Art und Weise geschehen.

Beispielsweise wird für das Aufschieben der Montageadapter verwendet, welcher einer Stabilisierung des Elastomerkörpers dient, sodass die zum Aufschieben notwendige Kraft zuverlässig in den Elastomerkörper eingeleitet werden kann. Vorzugsweise stützt der Montageadapter sowohl den Innenring als auch den Außenring ab, nämlich den Innenring in radialer Richtung nach innen und den Außenring in radialer Richtung nach außen. Hierzu liegt der Montageadapter an dem Außenumfang des Außenrings und an dem Innenumfang des Innenrings jeweils an, nämlich bevorzugt über die gesamte Längserstreckung des Elastomerkörpers in axialer Richtung. Dies ermöglicht ein besonders einfaches und zuverlässiges Einbringen der Rohrleitung in die Rohrleitungsaufnahme.

Zusätzlich oder alternativ kann es vorgesehen sein, die Rohrleitungsaufnahme bei dem Aufschieben des Elastomerkörpers aufzuweiten, nämlich durch Einbringen eines unter Druck stehenden Mediums, beispielsweise durch Einbringen von Druckluft. Auch hierdurch wird eine hinreichende Stabilisierung des Elastomerkörpers derart erzielt, dass das Aufschieben des Elastomerkörpers auf die Rohrleitung beziehungsweise das Einschieben der Rohrleitung in die Rohrleitungsaufnahme einfach möglich ist.

Schließlich kann im Rahmen einer besonders bevorzugten weiteren Ausgestaltung der Erfindung vorgesehen sein, dass die Rohrleitung an ihrem an der Schlauchtülle zu befestigenden Ende aufgeweitet wird, sodass Innenabmessungen des aufgeweiteten Endes mindestens so groß sind wie maximale Außenabmessungen eines nach dem Aufbringen der Rohrleitung auf die Schlauchtülle in der Rohrleitung aufgenommenen Bereichs der Schlauchtülle, insbesondere eines an der Schlauchtülle ausgebildeten Haltewulsts. An dem Ende der Rohrleitung werden also die Innenabmessungen von ersten Abmessungen auf zweite Abmessungen, beispielsweise von einem ersten Durchmesser auf einen zweiten Durchmesser, vergrößert. Aufgrund dieses Vergrößerns ist das Aufbringen der Rohrleitung mitsamt dem Elastomerkörper auf die Schlauchtülle vereinfacht oder überhaupt erst möglich.

Beispielsweise sind die ersten Abmessungen beziehungsweise der erste Durchmesser kleiner als die Außenabmessungen der Schlauchtülle, sodass ohne das Aufweiten das Aufbringen der Rohrleitung auf die Schlauchtülle nicht möglich ist. Aus diesem Grund wird die Rohrleitung an einem Ende derart aufgeweitet, dass sie mitsamt dem Elastomerkörper ohne weiteres auf die Schlauchtülle aufschiebbar ist. Das Aufweiten erfolgt derart, dass nach dem Aufweiten die Innenabmessungen des aufgeweiteten Endes der Rohrleitung mindestens so groß sind wie die maximalen Außenabmessungen der Schlauchtülle. Unter den maximalen Außenabmessungen sind die Abmessungen in radialer Richtung zu verstehen, welche über den gesamten Bereich der Schlauchtülle hinweg maximal auftreten, welcher nach dem Aufbringen der Rohrleitung auf die Schlauchtülle in der Rohrleitung angeordnet ist. Die maximalen Außenabmessungen der Schlauchtülle werden insbesondere von dem - optionalen - Haltewulst definiert, welcher beispielsweise in Form der Olive vorliegt oder eine solche ausbildet.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Längsschnittdarstellung einer Fluidverbindungsanordnung mit einer Rohrleitung, einer Schlauchtülle und einem Fluidverbindungsadapter,
- Figur 2: eine schematische Darstellung eines Elastomerkörpers des Fluidverbindungsadapters,
- Figur 3: eine schematische Schnittdarstellung des Elastomerkörpers in einer ersten Ausführungsform,
- Figur 4: eine schematische Schnittdarstellung des Elastomerkörpers in einer zweiten Ausführungsform,
- Figur 5: eine schematische Schnittdarstellung des Elastomerkörpers in einer dritten Ausführungsform,
- Figur 6: eine schematische Darstellung des Elastomerkörpers in einer vierten Ausführungsform,
- Figur 7: eine schematische Darstellung des Elastomerkörpers in einer ersten erfindungsgemäßen Ausführungsvariante,
- Figur 8: eine schematische Darstellung des Elastomerkörpers in einer zweiten erfindungsgemäßen Ausführungsvariante,
- Figur 9: eine schematische Schnittdarstellung des Fluidverbindungsadapters mit einem Montageadapter in einer ersten Ausgestaltung, sowie
- Figur 10: eine schematische Darstellung des Fluidverbindungsadapters mit dem Montageadapter in einer zweiten Ausgestaltung.

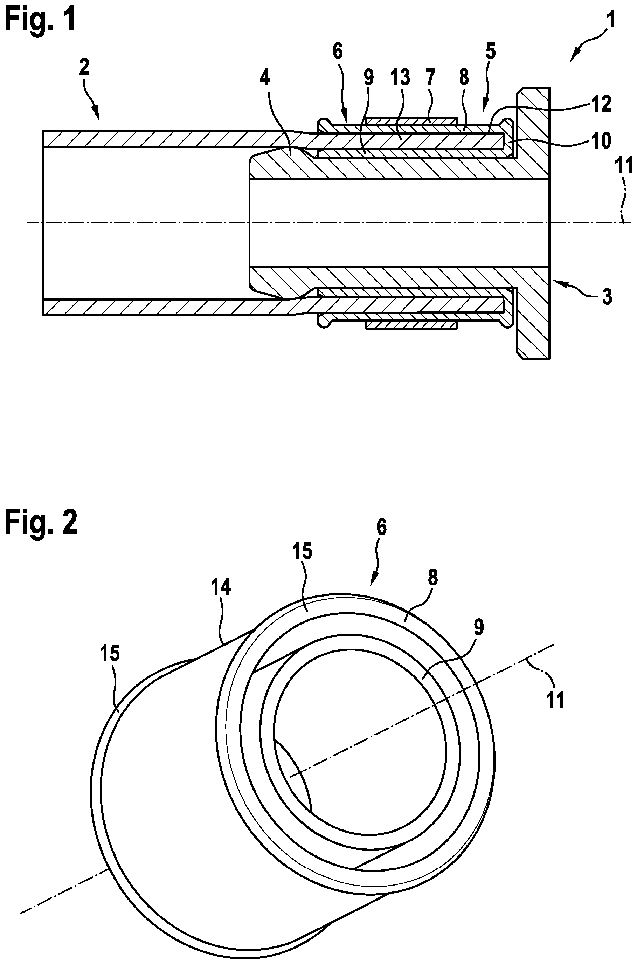

Die Figur 1 zeigt eine schematische Schnittdarstellung einer Fluidverbindungsanordnung 1. Diese weist eine Rohrleitung 2 und eine Schlauchtülle 3 auf, welche fluidtechnisch miteinander verbunden werden sollen. Die Schlauchtülle 3 ist beispielsweise Bestandteil einer fluidführenden Einrichtung und zur fluidtechnischen Verbindung mit einer Schlauchleitung vorgesehen und ausgebildet. Die Schlauchtülle 3 weist zur Befestigung der Schlauchleitung eine Olive 4 auf, die in Form einer Verdickung beziehungsweise eines Haltewulsts mit gerundeter Außenkontur an der Schlauchtülle 3 ausgebildet ist.

Die fluidtechnische Verbindung zwischen der Rohrleitung 2 und der Schlauchtülle 3 wird mittels eines Fluidverbindungsadapters 5 hergestellt. Der Fluidverbindungsadapter 5 weist einen Elastomerkörper 6 sowie ein Befestigungselement 7 auf, wobei der Elastomerkörper 6 und die Rohrleitung 2 mittels des Befestigungselements 7 gemeinsam an der Schlauchtülle 3 befestigt sind. Das Befestigungselement 7 liegt in dem hier dargestellten Ausführungsbeispiel als Schlauchschelle vor. Es kann jedoch auch eine Ausgestaltung als Schiebehülse oder als Federschelle vorgesehen sein.

Der Elastomerkörper 6 verfügt über einen Außenring 8, einen Innenring 9 sowie über einen Verbindungssteg 10. Der Außenring 8 und der Innenring 9 sind konzentrisch bezüglich einer Längsmittelachse 11 des Elastomerkörpers 6 zueinander angeordnet und hierbei in radialer Richtung voneinander beabstandet. Der Außenring 8 und der Innenring 9 sind von dem Verbindungssteg 10 endseitig miteinander verbunden, sodass der Außenring 8, der Innenring 9 und der Verbindungssteg 10 insgesamt U-förmig zueinander angeordnet sind. Der Außenring 8, der Innenring 9 und der Verbindungssteg 10 begrenzen gemeinsam eine Rohrleitungsaufnahme 12, die der Aufnahme eines Rohrleitungsendes 13 der Rohrleitung 2 dient.

Der Elastomerkörper 6 ist zum Aufschieben auf das Rohrleitungselement 13 vorgesehen und ausgebildet. Weiterhin ist der Elastomerkörper 6 dazu vorgesehen und ausgebildet, gemeinsam mit der Rohrleitung 2 beziehungsweise dem Rohrleitungsende 13 auf die Schlauchtülle 3 aufgeschoben zu werden. Hierzu sind die Rohrleitung 2, die Schlauchtülle 3 und der Elastomerkörper 6 derart bemessen, dass während des Aufschiebens der Innenring 9 elastisch komprimiert wird, nämlich von der Olive 4 beziehungsweise dem Haltewulst. Der Elastomerkörper 6 ist derart bemessen, dass er vollständig auf der einem freien Ende der Schlauchtülle 3 abgewandten Seite der Olive 4 vorliegt. Hierzu sind die Abmessungen des Elastomerkörpers 6 in axialer Richtung bezüglich der Längsmittelachse 11 auf die Abmessungen der Schlauchtülle 3 abgestimmt.

Die Figur 2 zeigt eine schematische Darstellung des Elastomerkörpers 6. Es ist deutlich erkennbar, dass der Außenring 8 und der Innenring 9 in Umfangsrichtung bezüglich der Längsmittelachse 11 durchgehend ausgebildet sind, also die Längsmittelachse 11 in Umfangsrichtung jeweils vollständig umgreifen. Es ist weiterhin erkennbar, dass der Elastomerkörper 6 eine Befestigungsschellenaufnahme 14 aufweist, welche zur Aufnahme des Befestigungselements 7, insbesondere der Schlauchschelle, vorgesehen und ausgebildet ist. Die Befestigungsschellenaufnahme 14 ist vorzugsweise auf in axialer Richtung gegenüberliegenden Seiten von zwei Ringstegen 15 begrenzt. Diese verhindern ein unbeabsichtigtes Entfernen beziehungsweise Herunterrutschen des Befestigungselements 7 von dem Elastomerkörper 6.

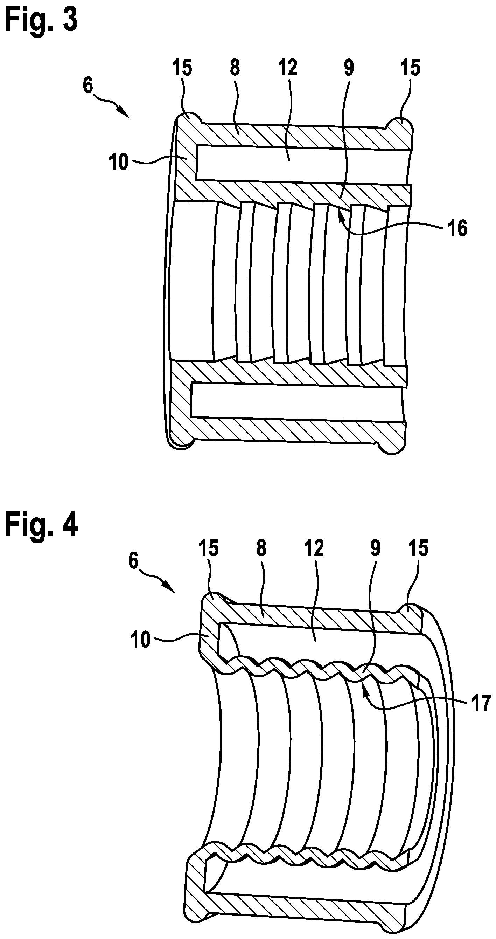

Die Figur 3 zeigt eine schematische Schnittdarstellung des Elastomerkörpers 6 in einer ersten Ausführungsform. Auf die vorstehenden Ausführungen wird grundsätzlich verwiesen. In der ersten Ausführungsform ist der Außenring 9 auf seiner der Rohrleitungsaufnahme 12 abgewandten Seite profiliert und weist hierzu ein Sägezahnprofil 16 auf. Dieses vereinfacht ein Aufschieben des Elastomerkörpers 6 auf die Schlauchtülle 3 und erschwert im Gegenzug ein Entfernen des Elastomerkörpers 6 von der Schlauchtülle 3.

Die Figur 4 zeigt eine schematische Schnittdarstellung des Elastomerkörpers 6 in einer zweiten Ausführungsform. In dieser liegt wiederum eine Profilierung des Innenrings 9 auf seiner der Rohrleitungsaufnahme 12 abgewandten Seite vor, wobei die Profilierung als Wellenprofil 17 ausgeführt ist. Das Wellenprofil 17 liegt sowohl auf der der Rohrleitungsaufnahme 12 abgewandten Seite des Innenrings 9 als auch auf der der Rohrleitungsaufnahme 12 zugewandten Seite des Innenrings 9 vor. Mit einer derartigen Ausgestaltung wird eine besonders zuverlässige Befestigung des Elastomerkörpers 6 sowohl an der Rohrleitung 2 als auch an der Schlauchtülle 3 realisiert.

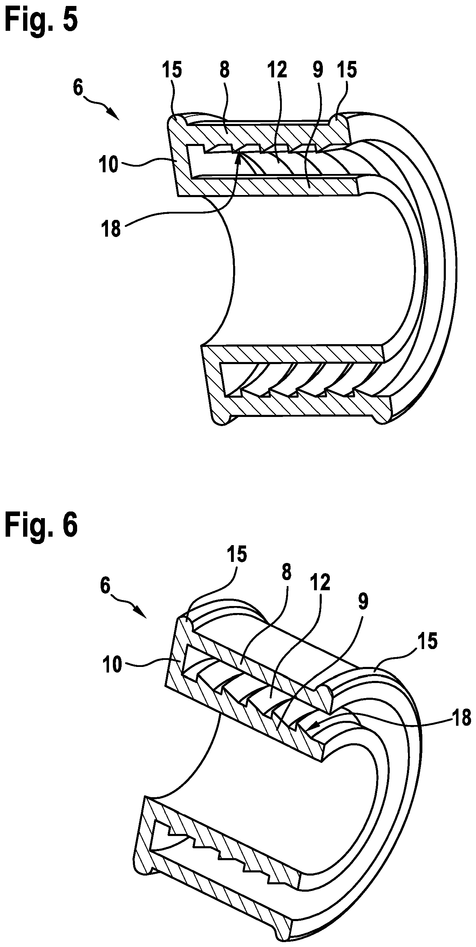

Die Figur 5 zeigt eine schematische Darstellung des Elastomerkörpers 6 in einer dritten Ausführungsform, wobei der Außenring 8 auf seiner der Rohrleitungsaufnahme 12 zugewandten Seite profiliert ist. In dem hier dargestellten Ausführungsbeispiel liegt die Profilierung als Sägezahnprofil 18 vor.

Die Figur 6 zeigt eine schematische Schnittdarstellung des Elastomerkörpers 6 in einer vierten Ausführungsform. Bei dieser ist das Sägezahnprofil 18 im Unterschied zu der vorstehend beschriebenen dritten Ausführungsform nicht an dem Außenring 8 sondern an dem Innenring 9 ausgebildet, nämlich auf der der Rohrleitungsaufnahme 12 zugewandten Seite des Innenrings 9. Selbstverständlich ist es möglich, das Sägezahnprofil 18 sowohl an dem Außenring 8 als auch an dem Innenring 9 auszubilden, nämlich jeweils auf der der Rohrleitungsaufnahme 12 zugewandten Seite des jeweiligen Rings 8 beziehungsweise 9.

Die beschriebenen Ausführungsbeispiele und Ausführungsformen können beliebig miteinander kombiniert werden. So ist es beispielsweise möglich, dass das Sägezahnprofil 16 an dem Innenring 9 ausgebildet ist, wohingegen das Sägezahnprofil 18 an dem Außenring 8 oder an dem Innenring 9 vorliegt. Ebenso ist es möglich, dass das Sägezahnprofil 16 an dem Innenring 9 ausgebildet ist und das Sägezahnprofil 18 sowohl an dem Außenring 8 als auch an dem Innenring 9 vorliegt. In jedem der genannten Fälle kann das Sägezahnprofil 16 durch das Wellenprofil 17 ersetzt werden. Beispielsweise liegt also das Wellenprofil 17 an dem Innenring 9 vor, wohingegen der Außenring 8 das Sägezahnprofil 18 aufweist.

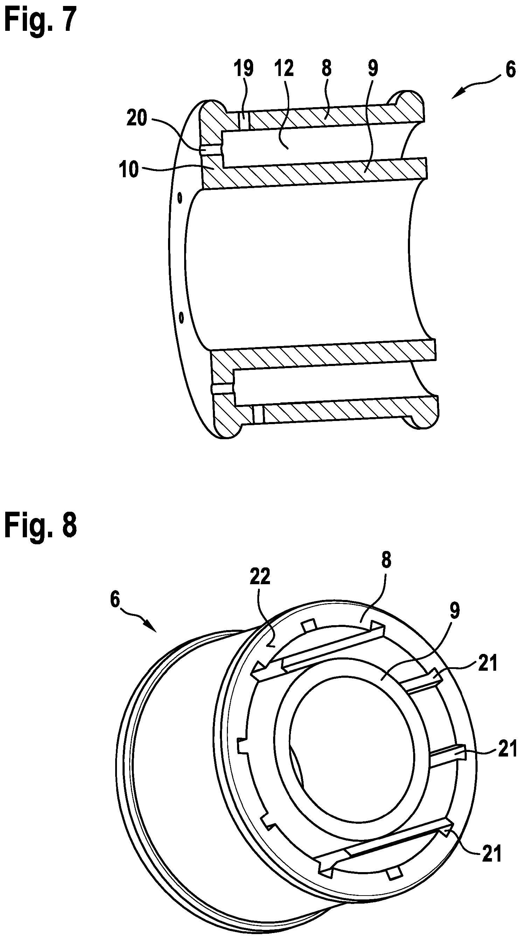

Die Figur 7 zeigt eine schematische Darstellung des Elastomerkörpers 6 in einer ersten erfindungsgemäßen Ausführungsvariante. Bei dieser ist in dem Außenring 8 wenigstens eine Luftdurchtrittsöffnung 19, in dem hier dargestellten Ausführungsbeispiel eine Vielzahl von Luftdurchtrittsöffnung 19, ausgebildet. Zusätzlich oder alternativ ist in dem Verbindungssteg 10 wenigstens eine weitere Luftdurchtrittsöffnung 20 ausgebildet. In dem hier dargestellten Ausführungsbeispiel liegen mehrere Luftdurchtrittsöffnungen 20 vor. Sowohl die Luftdurchtrittsöffnung 19 als auch die Luftdurchtrittsöffnung 20 sind vorzugsweise jeweils gleichmäßig über den Umfang des Elastomerkörpers 6 verteilt angeordnet, also in Umfangsrichtung gleichmäßig voneinander beabstandet.

Die Luftdurchtrittsöffnung 19 und die Luftdurchtrittsöffnung 20 münden jeweils in die Rohrleitungsaufnahme 12 ein, nämlich derart, dass bei einem Einbringen der Rohrleitung 2 in die Rohrleitungsaufnahme 12 ein hierbei verdrängtes Medium, vorzugsweise Luft, durch die Luftdurchtrittsöffnung 19 und die Luftdurchtrittsöffnung 20 entweichen kann. Es sei nochmals darauf hingewiesen, dass auch lediglich die Luftdurchtrittsöffnung 19 oder alternativ die Luftdurchtrittsöffnung 20 vorliegen kann. Besonders bevorzugt sind jedoch beide Luftdurchtrittsöffnungen 19 und 20 ausgebildet.

Die Figur 8 zeigt eine schematische Darstellung des Elastomerkörpers 6 in einer zweiten erfindungsgemäßen Ausführungsvariante. In dieser ist in dem Außenring 8 wenigstens ein Druckausgleichskanal 21, in dem hier dargestellten Ausführungsbeispiel mehrere Druckausgleichskanäle 21, ausgebildet. Die Druckausgleichskanäle 21 sind lediglich teilweise beispielhaft gekennzeichnet. Die Druckausgleichskanäle 21 erstrecken sich vorzugsweise über einen Großteil der axialen Erstreckung des Außenrings. Insbesondere durchgreifen sie eine Stirnseite 22 des Außenrings 8. In die umgekehrte Richtung erstrecken sie sich besonders bevorzugt bis hin zu dem Verbindungssteg 10. Auch der Druckausgleichskanal 21 ermöglicht ein zuverlässiges Entweichen von verdrängtem Medium aus der Rohrleitungsaufnahme 12 während des Einbringens der Rohrleitung 2 in diese.

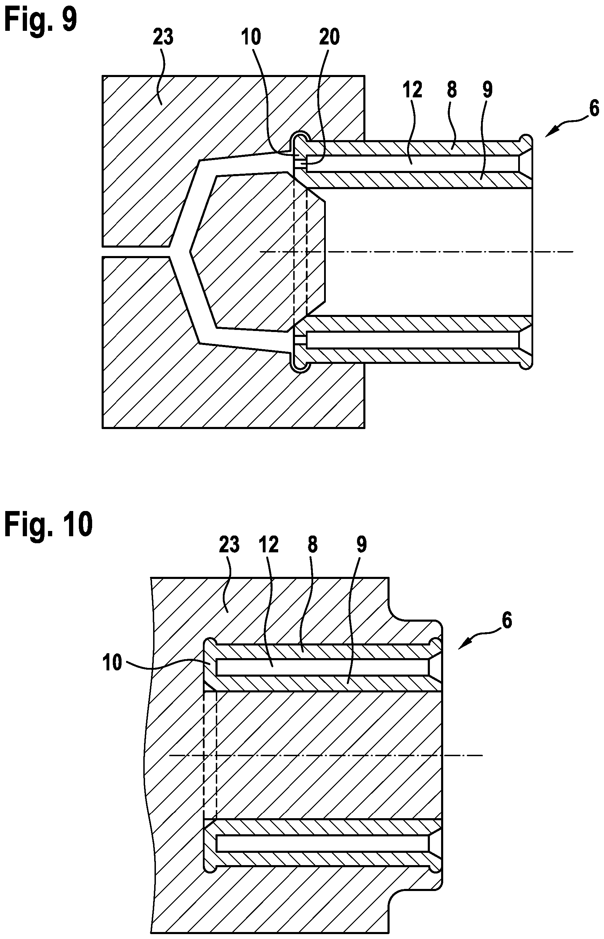

Die Figur 9 zeigt eine Anordnung des Elastomerkörpers 6 sowie eines Montageadapters 23 in einer ersten Ausgestaltung. In dieser ersten Ausgestaltung ist der Montageadapter 23 dazu ausgebildet, durch die Luftdurchtrittsöffnungen 20 des Elastomerkörpers 6 ein unter Druck stehendes Medium in die Rohrleitungsaufnahme 12 einzubringen, vorzugsweise während der Elastomerkörper 6 auf die Rohrleitung 2 aufgeschoben wird. Hierdurch wird ein Aufweiten der Rohrleitungsaufnahme 12 und entsprechend eine vereinfachte Montage realisiert.

Die Figur 10 zeigt eine Anordnung des Elastomerkörpers 6 und des Montageadapters 23 in einer zweiten Ausgestaltung. In dieser zweiten Ausgestaltung greift der Montageadapter 23 in den Innenring 9 ein, sodass er an einem Innenumfang des Innenrings 9 anliegt. Gleichzeitig umgreift er den Außenring 8, sodass er an einem Außenumfang des Außenrings 8 anliegt. Bevorzugt erstreckt sich der Montageadapter 23 über die gesamte Längserstreckung des Elastomerkörpers 6, sodass er in axialer Richtung durchgehend an dem Innenring 9 und dem Außenring 8 anliegt. Hierdurch wird eine besonders einfache Montage beziehungsweise ein einfaches Aufschieben des Elastomerkörpers 6 auf die Rohrleitung 2 realisiert.

Selbstverständlich können die beschriebenen Ausgestaltungen auf die vorstehend beschriebenen Ausführungsformen und Ausführungsvarianten des Elastomerkörpers 6 im Rahmen der in den Ansprüchen definierten Erfindung beliebig angewandt werden, welche ebenfalls im Rahmen der in den Ansprüchen definierten Erfindung beliebig miteinander kombinierbar sind. Es ergeben sich somit zahlreiche vorteilhafte Variationen der Fluidverbindungsanordnung 1 und/oder des Montageadapters 23. Mithilfe des beschriebenen Fluidverbindungsadapters 5 lässt sich auf einfache und effiziente Art und Weise die Rohrleitung 2 mit der eigentlich für eine Schlauchleitung vorgesehenen Schlauchtülle 3 fluidtechnisch verbinden. Die hergestellte Verbindung ist hierbei äußerst langlebig und zuverlässig.

## Patentansprüche

1. Fluidverbindungsadapter (5), der zur fluidtechnischen Verbindung einer Rohrleitung (2) mit einer Schlauchtülle (3) über einen auf die Schlauchtülle (3) aufschiebbaren Elastomerkörper (6) verfügt, der einen zum Aufschieben auf die Schlauchtülle (3) ausgebildeten Innenring (9), einen bezüglich des Innenrings (9) konzentrisch angeordneten Außenring (8) sowie einen den Innenring (9) und den Außenring (8) miteinander verbindenden Verbindungssteg (10) aufweist, wobei der Innenring (9), der Außenring (8) und der Verbindungssteg (10) gemeinsam eine Rohrleitungsaufnahme (12) zur Aufnahme eines Rohrleitungsendes (13) der Rohrleitung (2) begrenzen, **dadurch gekennzeichnet, dass** zum Druckausgleich bei einem Einbringen der Rohrleitung (2) in die Rohrleitungsaufnahme (12) eine randgeschlossene Luftdurchtrittsöffnung (19, 20) den Außenring (8) und/oder den Verbindungssteg (10) vollständig durchgreift und/oder in dem Außenring (8) und/oder dem Innenring (9) wenigstens ein in axialer Richtung verlaufender, eine Stirnseite des Außenrings (8) beziehungsweise des Innenrings (9) auf der dem Verbindungssteg (10) abgewandten Seite durchgreifender Druckausgleichskanal (21) ausgebildet ist.

2. Fluidverbindungsadapter nach Anspruch 1, **gekennzeichnet durch** eine Schlauchschelle, eine Schiebehülse oder eine Federschelle zur Befestigung der Rohrleitung (2) und des Elastomerkörpers (6) an der Schlauchtülle (3).

3. Fluidverbindungsadapter nach einem der vorhergehenden Ansprüche, **dadurch gekennzeichnet, dass** der Außenring (8) auf seiner der Rohrleitungsaufnahme (12) abgewandten Seite eine Befestigungsschellenaufnahme (14) zur Aufnahme einer Schlauchschelle oder einer Federschelle aufweist.

4. Fluidverbindungsadapter nach einem der vorhergehenden Ansprüche, **dadurch gekennzeichnet, dass** der Außenring (8) und/oder der Innenring (9) jeweils auf seiner der Rohrleitungsaufnahme (12) zugewandten Seite profiliert ist, und/oder dass der Innenring (9) auf seiner der Rohrleitungsaufnahme (12) abgewandten Seite im Längsschnitt gesehen profiliert ist.

5. Fluidverbindungsadapter nach einem der vorhergehenden Ansprüche, **dadurch gekennzeichnet, dass** der Elastomerkörper (6) aus einem elektrisch leitfähigen Elastomer besteht.

6. Fluidverbindungsanordnung (1) mit einer Rohrleitung (2), einer Schlauchtülle (3) und einem Fluidverbindungsadapter (5) nach einem der Ansprüche 1 bis 5.

7. Verfahren zum Herstellen einer Fluidverbindungsanordnung (1) nach Anspruch 6, die eine Rohrleitung (2), eine Schlauchtülle (3) und einen Fluidverbindungsadapter (5) aufweist, wobei der Fluidverbindungsadapter (5) zur fluidtechnischen Verbindung der Rohrleitung (2) mit der Schlauchtülle (3) über einen Elastomerkörper (6) verfügt, der auf die Schlauchtülle (3) aufgeschoben wird und eine zum Aufschieben auf die Schlauchtülle (3) ausgebildeten Innenring (9), einen bezüglich des Innenrings (9) konzentrisch angeordneten Außenring (8) sowie einen den Innenring (9) und den Außenring (8) miteinander verbindenden Verbindungssteg (10) aufweist, wobei der Innenring (9), der Außenring (8) und der Verbindungssteg (10) gemeinsam eine Rohrleitungsaufnahme (12) begrenzen, in der ein Rohrleitungsende (13) der Rohrleitung (2) angeordnet wird, **dadurch gekennzeichnet, dass** zum Druckausgleich bei einem Einbringen der Rohrleitung (2) in die Rohrleitungsaufnahme (12) eine randgeschlossene Luftdurchtrittsöffnung (19, 20) den Außenring (8) und/oder den Verbindungssteg (10) vollständig durchgreift und/oder in dem Außenring (8) und/oder dem Innenring (9) wenigstens ein in axialer Richtung verlaufender, eine Stirnseite des Außenrings (8) beziehungsweise des Innenrings (9) auf der dem Verbindungssteg (10) abgewandten Seite durchgreifender Druckausgleichskanal (21) ausgebildet ist, und dass bei dem Aufschieben des Elastomerkörpers (6) die Rohrleitungsaufnahme (12) durch Einbringen eines unter Druck stehenden Mediums aufgeweitet wird.

8. Verfahren nach Anspruch 7, **dadurch gekennzeichnet, dass** die Rohrleitung (2) an ihrem an der Schlauchtülle (3) zu befestigenden Ende aufgeweitet wird, sodass Innenabmessungen des aufgeweiteten Endes mindestens so groß sind wie maximale Außenabmessungen eines nach dem Aufbringen der Rohrleitung (2) auf die Schlauchtülle (3) in der Rohrleitung (2) aufgenommenen Bereichs der Schlauchtülle (3), insbesondere eines an der Schlauchtülle (3) ausgebildeten Haltewulsts (4).

## Claims

1. Fluid-connection adapter (5) which, for the fluid connection of a pipe (2) to a hose nozzle (3), has an elastomer body (6) which can be pushed onto the hose nozzle (3), the elastomer body (6) comprising an inner ring (9) configured to be pushed onto the hose nozzle (3), an outer ring (8) arranged concentrically with respect to the inner ring (9), and a connecting web (10) connecting the inner ring (9) and the outer ring (8) to one another, wherein the inner ring (9), the outer ring (8) and the connecting web (10) jointly delimit a pipe receptacle (12) for receiving a pipe end (13) of the pipe (2), **characterised in that**, for the equalisation of pressure when the pipe (2) is introduced into the pipe receptacle (12), an air passage opening (19, 20) closed at the rim extends completely through the outer ring (8) and/or the connecting web (10) and/or at least one pressure equalisation channel (21) is formed in the outer ring (8) and/or the inner ring (9), the pressure equalisation channel (21) extending in the axial direction and extending through an end face of the outer ring (8) or of the inner ring (9) on the side facing away from the connecting web (10).

2. Fluid-connection adapter according to claim 1, **characterised by** a hose clamp, a sliding sleeve or a spring clamp for fastening the pipe (2) and the elastomer body (6) to the hose nozzle (3).

3. Fluid-connection adapter according to one of the preceding claims, **characterised in that** the outer ring (8) comprises, on its side facing away from the pipe receptacle (12), a fastening clamp receptacle (14) for receiving a hose clamp or a spring clamp.

4. Fluid-connection adapter according to one of the preceding claims, **characterized in that** the outer ring (8) and/or the inner ring (9) is profiled in each case on its side facing towards the pipeline receptacle (12), and/or **in that** the inner ring (9) is profiled on its side facing away from the pipeline receptacle (12), as seen in longitudinal section.

5. Fluid-connection adapter according to one of the preceding claims, **characterised in that** the elastomer body (6) consists of an electrically conductive elastomer.

6. Fluid-connection arrangement (1) comprising a pipe (2), a hose nozzle (3) and a fluid-connection adapter (5) according to any one of claims 1 to 5.

7. Method for producing a fluid-connection arrangement (1) according to claim 6, the fluid connection arrangement (1) comprising a pipe (2), a hose nozzle (3) and a fluid-connection adapter (5), wherein the fluid-connection adapter (5) has an elastomer body (6) for the fluid connection of the pipe (2) to the hose nozzle (3), which is pushed onto the hose nozzle (3) and comprises an inner ring (9) configured to be pushed onto the hose nozzle (3), an outer ring (8) arranged concentrically with respect to the inner ring (9), and a connecting web (10) connecting the inner ring (9) and the outer ring (8) to one another, the inner ring (9), the outer ring (8) and the connecting web (10) jointly delimiting a pipe receptacle (12) in which a pipe end (13) of the pipe (2) is arranged, **characterized in that**, for the equalisation of pressure when the pipe (2) is introduced into the pipe receptacle (12), an air passage opening (19, 20) closed at the rim extends completely through the outer ring (8) and/or the connecting web (10) and/or at least one pressure equalisation channel (21) is formed in the outer ring (8) and/or the inner ring (9), the pressure equalisation channel (21) extending in the axial direction and extending through an end face of the outer ring (8) or of the inner ring (9) on the side facing away from the connecting web (10), and **in that**, when the elastomer body (6) is pushed on, the pipeline receptacle (12) is widened by the introduction of a pressurised medium.

8. Method according to claim 7, **characterised in that** the pipe (2) is widened at its end to be fastened to the hose nozzle (3), so that internal dimensions of the widened end are at least as large as maximum external dimensions of a region of the hose nozzle (3) received in the pipe (2) after the pipe (2) has been placed on the hose nozzle (3), in particular of a retaining bead (4) formed on the hose nozzle (3).

## Revendications

1. Adaptateur de liaison fluidique (5) qui, pour la liaison fluidique d'une conduite (2) avec un douille de tuyau (3), dispose d'un corps en élastomère (6) pouvant être enfilé sur la douille de tuyau (3), lequel corps en élastomère comprend une bague intérieure (9) conçue pour être enfilée sur la douille de tuyau (3), une bague extérieure (8) disposée concentriquement par rapport à la bague intérieure (9), ainsi qu'une barrette de liaison (10) reliant entre elles la bague intérieure (9) et la bague extérieure (8), la bague intérieure (9), la bague extérieure (8) et la barrette de liaison (10) délimitant conjointement une réception de conduite (12) destinée à recevoir une extrémité de conduite (13) de la conduite (2), **caractérisé en ce que**, pour la compensation de pression lors d'une introduction de la conduite (2) dans la réception de conduite (12), une ouverture de passage d'air (19, 20) fermée sur le bord traverse complètement la bague extérieure (8) et/ou la barrette de liaison (10) et/ou au moins un canal de compensation de pression (21) s'étendant dans la direction axiale et traversant une face frontale de la bague extérieure (8) ou de la bague intérieure (9) sur le côté opposé à la barrette de liaison (10) est formé dans la bague extérieure (8) et/ou la bague intérieure (9).

2. Adaptateur de liaison fluidique selon la revendication 1, **caractérisé par** un collier de serrage, un manchon coulissant ou un collier à ressort pour la fixation de la conduite (2) et du corps en élastomère (6) sur la douille de tuyau (3).

3. Adaptateur de liaison fluidique selon l'une des revendications précédentes, **caractérisé en ce que** la bague extérieure (8) présente, sur son côté opposé à la réception de conduite (12), une réception de collier de fixation (14) pour recevoir un collier de serrage ou un collier à ressort.

4. Adaptateur de liaison fluidique selon l'une des revendications précédentes, **caractérisé en ce que** la bague extérieure (8) et/ou la bague intérieure (9) est profilée respectivement sur son côté tourné vers la réception de conduite (12), et/ou **en ce que** la bague intérieure (9) est profilée sur son côté opposé à la réception de conduite (12), vu en coupe longitudinale.

5. Adaptateur de liaison fluidique selon l'une quelconque des revendications précédentes, **caractérisé en ce que** le corps en élastomère (6) est constitué d'un élastomère conducteur électrique.

6. Ensemble de liaison fluidique (1) comprenant une conduite (2), une douille de tuyau (3) et un adaptateur de liaison fluidique (5) selon l'une quelconque des revendications 1 à 5.

7. Procédé de fabrication d'un ensemble de liaison fluidique (1) selon la revendication 6, qui comprend une conduite (2), une douille de tuyau (3) et un adaptateur de liaison fluidique (5), l'adaptateur de liaison fluidique (5) disposant d'un corps en élastomère (6) pour la liaison fluidique de la conduite (2) avec la douille de tuyau (3), lequel corps en élastomère est enfilé sur la douille de tuyau (3) et présente une bague intérieure (9) conçue pour être enfilée sur la douille de tuyau (3), une bague extérieure (8) disposée concentriquement par rapport à la bague intérieure (9), ainsi qu'une barrette de liaison (10) reliant entre elles la bague intérieure (9) et la bague extérieure (8), la bague intérieure (9), la bague extérieure (8) et la barrette de liaison (10) délimitant conjointement une réception de conduite (12), dans laquelle est disposée une extrémité de conduite (13) de la conduite (2), **caractérisé en ce que**, pour la compensation de pression lors d'une introduction de la conduite (2) dans la réception de conduite (12), une ouverture de passage d'air (19, 20) fermée sur le bord traverse complètement la bague extérieure (8) et/ou la barrette de liaison (10) et/ou au moins un canal de compensation de pression (21) s'étendant dans la direction axiale et traversant une face frontale de la bague extérieure (8) ou de la bague intérieure (9) sur le côté opposé à la barrette de liaison (10) est formé dans la bague extérieure (8) et/ou la bague intérieure (9), et **en ce que** lors de l'enfilage du corps en élastomère (6), la réception de conduite (12) est élargie par l'introduction d'un fluide sous pression.

8. Procédé selon la revendication 7, **caractérisé en ce que** la conduite (2) est élargie à son extrémité à fixer sur la douille de tuyau (3), de sorte que des dimensions intérieures de l'extrémité élargie sont au moins aussi grandes que des dimensions extérieures maximales d'une zone de la douille de tuyau (3) reçue dans la conduite (2) après la mise en place de la conduite (2) sur la douille de tuyau (3), en particulier d'un bourrelet de retenue (4) formé sur la douille de tuyau (3).
